# EUROPÄISCHE PATENTSCHRIFT

(11) **EP 0 770 204 B1**
(45) Veröffentlichungstag und Bekanntmachung des Hinweises auf die Patenterteilung: **25.03.1998**
(21) Anmeldenummer: 95926852.5
(22) Anmeldetag: 11.07.1995
(51) Int. Cl.: G01K 7/18, H01C 17/06

(54) **Verfahren zum Herstellen eines Sensors zum Erfassen einer Temperatur und/oder einer Strömung**
Process for producing a temperature and/or current detecting sensor
Procédé pour la production d'un capteur de detection de temperature et/ou de courant

(30) Priorität: 12.07.1994 DE 9411235 U
(43) Veröffentlichungstag der Anmeldung: 02.05.1997
(73) Patentinhaber: SENSOTHERM TEMPERATURSENSORIK GmbH, 90441 Nürnberg (DE)
(72) Erfinder: ZITZMANN, Heinrich, D-91207 Lauf a.d. Pegnitz (DE)
(74) Vertreter: Schoppe, Fritz, Dipl.-Ing.
(86) Internationale Anmeldenummer: EP9502689
(87) Internationale Veröffentlichungsnummer: WO9601983

(56) Entgegenhaltungen:
- US-A- 4 146 957
- ELEKTROTECHNIK UND MASCHINENBAU, Bd. 103, Nr. 1, Januar 1985 WIEN AT, Seiten 22-26, T.F.E. WALLA E.A. 'DICKSCHICHTTEMPERATURSENSOREN'
- PATENT ABSTRACTS OF JAPAN vol. 12 no. 220 (P-720) ,23.Juni 1988 & JP,A,63 016255 (FUJI ELECTRIC CO LTD) 23.Januar 1988,
- PATENT ABSTRACTS OF JAPAN vol. 17 no. 81 (E-1321) ,18.Februar 1993 & JP,A,04 279003 (FUJI XEROX CO LTD) 5.Oktober 1992,

## Beschreibung

Die vorliegende Erfindung betrifft ein Verfahren zum Herstellen eines Sensors zum Erfassen einer Temperatur und/oder einer Strömung.

Aus dem Stand der Technik sind bereits Sensoren zum Erfassen einer Temperatur und/oder einer Strömung bekannt, die einen Träger und eine strukturierte Widerstandsschicht auf dem Träger aufweisen. Bei diesen bekannten Sensoren umfaßt die Widerstandsschicht z. B. eine reine Platinschicht, auf der weitere Schichten angeordnet sind. Bei diesen bekannten Sensoren ist die Einstellung eines vorbestimmten Temperaturkoeffizienten aufgrund der oben beschriebenen Struktur nur sehr ungenau möglich. Dies führt zu instabilen Temperaturkoeffizient-Werten, so daß die erfaßten Meßwerte aufgrund dieser Instabilität nicht zuverlässig sind.

Aus dem Patent Abstracts of Japan, Vol. 12, No. 220 (P-720) ist ein Sensor bekannt, der aus einem keramischen Träger und einer Widerstandsschicht aus Pt-Rh besteht. Die Widerstandsschicht wird durch Aufbringen einer Pt-Rh-Paste auf ein Substrat mittels Siebdrucken und anschließendes Brennen erzeugt.

Aus dem Patent Abstracts of Japan, Vol. 17, No. 81 (E-1321) ist es bekannt, eine gleichförmige Widerstandsschicht aus einer Paste herzustellen. Als Ausgangsmaterial wird eine Lösung wenigstens einer metallorganischen Verbindung verwendet. Unter anderem werden Rh-Pt-Verbindungen erwähnt.

Der Erfindung liegt die Aufgabe zugrunde, ein Verfahren zum Herstellen eines Sensors anzugeben, mit dem eine genaue Einstellung des Temperaturkoeffizientens des Sensors ermöglicht ist.

Diese Aufgabe wird durch ein Verfahren gemäß Patentanspruch 1 gelöst.

Die vorliegende Erfindung schafft einen Sensor, der einen Träger und eine strukturierte Widerstandsschicht, die auf dem Träger angeordnet ist, umfaßt, wobei die Widerstandsschicht eine Platin-Rodiumschicht ist, die aus einer getemperten Platinresinat/Rodiumresinat-Mischung besteht.

Die Erfindung schafft ferner ein Verfahren zum Herstellen eines Sensor zum Erfassen einer Temperatur und/oder einer Strömung mit einem Träger und einer strukturierten Widerstandsschicht, die auf dem Träger angeordnet ist, mit folgenden Verfahrensschritten:
- Bereitstellen einer Mischung aus einer Platinresinatpaste und einer Rodiumresinatpaste;
- Drucken der Mischresinatpaste mittels eines Siebdruckverfahrens auf ein Aluminiumoxid-Substrat;
- Trocknen der aufgedruckten Paste;
- Einbrennen der Paste bei einer derartigen Tmperatur über eine solche Zeitdauer, daß ein in der Schicht enthaltenes Organikum ausgebrannt wird;
- Wiederholen der letztgenannten drei Prozeßschritte auf dem gleichen Substrat, bis eine gewünschte Gesamtschichtdicke erreicht ist;
- Tempern des Substrats mit der Gesamtschicht, um einen hohen und stabilen Temperaturkoeffizienten zu erreichen.

Bevorzugte Weiterbildungen der vorliegenden Erfindung sind in den Unteransprüchen definiert.

Der vorliegenden Erfindung liegt die Erkenntnis zugrunde, daß anstelle der im Stand der Technik verwendeten mehreren Schichten, nämlich der Platinschicht, auf die weitere Schichten aufgebracht sind, zum Einstellen des Temperaturkoeffizienten eine einzelne Schicht besser geeignet ist. Diese Widerstandsschicht enthält eine Mischung aus Platin und Rhodium, wodurch eine genaue Einstellung des Temperaturkoeffizienten möglich ist.

Ein bevorzugtes Ausführungsbeispiel der vorliegenden Erfindung wird nachfolgend unter Bezugnahme auf die beiliegende Zeichnung näher erläutert. Es zeigt:

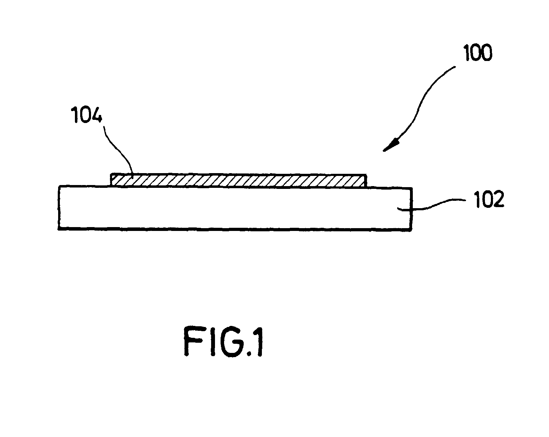

- Fig. 1: eine Schnittdarstellung eines Sensors zum Erfassen einer Temperatur und/oder einer Strömung gemäß einem Ausführungsbeispiel der vorliegenden Erfindung.

In Fig. 1 ist ein Sensor 100 zum Erfassen einer Temperatur und/oder einer Strömung dargestellt. Dieser Sensor umfaßt ein Substrat 102, das bevorzugterweise aus Aluminiumoxid mit einer Reinheit von 96,5% bis 99,5% besteht, wobei der Rest des Substrats aus anderen Oxiden besteht, auf dem eine strukturierte Widerstandsschicht 104 angeordnet ist. Die Widerstandsschicht ist eine Platin-Rhodiumschicht.

Zur Herstellung der Platin-Rhodiumschicht wird als Ausgangsmaterial eine Mischung aus einer Platinresinatpaste und einer Rhodiumresinatpaste verwendet. Die Platinresinatpaste weist 12 Gew.-% Platin auf, wobei der Rest der Paste durch ein Organikum gebildet ist, und die Rhodiumresinatpaste weist 7 Gew.-% Rhodium auf, wobei auch hier der Rest der Paste durch ein Organikum gebildet ist.

Diese beiden Pasten werden bei dem bevorzugten Ausführungsbeispiel gemischt, wobei durch eine Mischung von 99% Platinresinatpaste und 1% Rhodiumresinatpaste eine Platin-Rhodiumschicht mit einem Temperaturkoeffizienten von 3500 ppcm/°C erreicht wird, wenn die folgenden Prozeßschritte angewendet werden.
- Drucken der Mischresinatpaste mittels eines Siebdruckverfahrens auf ein Aluminiumoxid-Substrat mit einer Schichtdicke von etwa 15 µm.
- Trocknen der aufgedruckten Paste bei 80°C über eine Zeitdauer von 10 Minuten.
- Einbrennen der Paste in einem Durchlauf-Einbrennofen bei einer Temperatur von ungefähr 800°C, wodurch die Schichtdicke der Platin-Rodiumschicht nach dem ersten Brennen auf etwa 0,12 µm zurückgegangen ist, d. h. sehr viel Organikum wurde ausgebrannt.
- Wiederholen der ersten drei Prozeßschritte auf dem gleichen Substrat, bis eine Gesamtschichtdicke von 1,3 µm erreicht wird. Dies erfordert etwa 10 Aufdrucke der Paste und die daran anschließenden Prozeßschritte.
- Tempern des Substrats mit der Gesamtschichtdicke von 1,3 µm bei einer hohen Temperatur, bevorzugterweise 1400°C, über eine Zeitdauer von drei Stunden zusätzlich der Aufheiz- und Langsam-Abkühlzeit, um den hohen und stabilen Temperaturkoeffizienten von beispielsweise 3500 ppcm/°C zu erreichen.

Die hohe Temperaturbehandlung durch den oben beschriebenen Prozeß bewirkt die Beseitigung von strukturellen Gitterfehlern und eine zusätzliche Reinigung der Platin-Rodiumschicht, wodurch in dieser Schicht noch vorhandenes Restorganikum entfernt wird.

Es ist offensichtlich, daß die vorliegende Erfindung nicht auf das bei dem oben beschriebenen Ausführungsbeispiel beschriebene Verhältnis von Platin und Rodium beschränkt ist. Abhängig von dem erwünschten Temperaturkoeffizienten, den der Sensor aufweisen soll, ergeben sich unterschiedliche Mischungsverhältnisse.

Anstelle des oben beschriebenen Substrats können andere geeignete Trägermaterialien zur Aufnahme der strukturierten Widerstandsschicht vorgesehen sein, wobei die Träger entweder isolierend ist, oder nicht-isolierend ist, wobei in diesem Fall eine dünne Isolationsschicht zwischen der Oberfläche des Trägers und der strukturierten Widerstandsschicht angeordnet ist.

## Patentansprüche

1. Verfahren zum Herstellen eines Sensor (100) zum Erfassen einer Temperatur und/oder einer Strömung mit einem Träger (102) und einer strukturierten Widerstandsschicht (104), die auf dem Träger (102) angeordnet ist,
gekennzeichnet durch folgende Verfahrensschritte:
- Bereitstellen einer Mischung aus einer Platinresinatpaste und einer Rhodiumresinatpaste;
- Drucken der Mischresinatpaste mittels eines Siebdruckverfahrens auf ein Aluminiumoxid-Substrat;
- Trocknen der aufgedruckten Paste;
- Einbrennen der Paste bei einer derartigen Temperatur über eine solche Zeitdauer, daß ein in der Schicht enthaltener Resinatanteil ausgebrannt wird;
- Wiederholen der letztgenannten drei Prozeßschritte auf dem gleichen Substrat, bis eine gewünschte Gesamtschichtdicke erreicht ist;
- Tempern des Substrats mit der Gesamtschicht, um einen hohen und stabilen Temperaturkoeffizienten zu erreichen.

2. Verfahren zum Herstellen eines Sensor (100) nach Anspruch 1, dadurch gekennzeichnet,
daß bei dem Schritt des Bereitstellens der Mischung der Platinresinatpaste und der Rhodiumresinatpaste die Platinresinatpaste 12 Gew.-% Platin aufweist, wobei der Rest der Paste durch ein Resinat gebildet ist, und die Rodiumresinatpaste 7 Gew.-% Rhodium aufweist, wobei auch hier der Rest der Paste durch ein Resinat gebildet ist.

3. Verfahren zum Herstellen eines Sensor (100) nach Anspruch 1 oder 2, dadurch gekennzeichnet,
daß das Einbrennen der Paste bei einer Temperatur von ungefähr 800°C erfolgt.

4. Verfahren nach Anspruch 1, dadurch gekennzeichnet,
daß der Träger (102) aus 96,5% bis 99,5% Aluminiumoxid besteht und der Rest des Trägers aus anderen Oxiden besteht.

5. Verfahren nach Anspruch 1, dadurch gekennzeichnet,
daß das Verhältnis des Platinresinats zu dem Rhodiumresinat 99 Gew.-% zu 1 Gew.-% ist.

## Claims

1. A method for producing a sensor (100) which is used for sensing a temperature and/or a flow and which comprises a carrier (102) and a structured resistance layer (104) arranged on said carrier (102),
characterized by the following method steps:
- providing a mixture consisting of platinum resinate paste and a rhodium resinate paste;
- printing the mixed resinate paste by means of a screen printing process onto an aluminium oxide substrate;
- drying the paste which has been applied by printing;
- burning in the paste at such a temperature for such a period of time that a resinate component contained in the layer will be burnt out;
- repeating the last-mentioned three method steps on the same substrate until a desired overall layer thickness has been obtained;
- tempering the substrate with the whole layer so as to obtain a high and stable temperature coefficient.

2. A method for producing a sensor (100) according to claim 1, characterized in
that, in the step of providing the mixture which consists of the platinum resinate paste and the rhodium resinate paste, the platinum resinate paste contains 12% by weight of platinum, the rest of said paste consisting of a resinate, and the rhodium resinate paste contains 7% by weight of rhodium, the rest of said paste consisting again of a resinate.

3. A method for producing a sensor (100) according to claim 1 or 2, characterized in
that the paste is burnt in at a temperature of approx. 800°C.

4. A method according to claim 1, characterized in
that the carrier (102) consists of 96.5% to 99.5% aluminium oxide, the rest of said carrier consisting of other oxides.

5. A method according to claim 1, characterized in
that the ratio of platinum resinate to rhodium resinate is 99% by weight to 1% by weight.

## Revendications

1. Procédé pour fabriquer un capteur (100) servant à détecter une température et/ou un écoulement, comportant un support (102) et une couche résistive structurée (104) qui est disposée sur le support (102),
caractérisé par les étapes opératoires suivantes :
- préparation d'un mélange formé d'une pâte formée d'un résinate de platine et d'une pâte formée d'un résinate de rhodium ;
- application de la pâte formée du mélange de résinates par impression au moyen d'un procédé de sérigraphie sur un substrat en oxyde d'aluminium ;
- séchage de la pâte appliquée par impression ;
- cuisson de la pâte pour une température de ce type, pendant une durée telle qu'une partie du résinate contenu dans la couche est éliminée par brûlage ;
- répétition des trois étapes opératoires indiquées en dernier lieu sur le même substrat, jusqu'à ce qu'une épaisseur de couche totale désirée soit atteinte ;
- recuit du substrat portant la couche complète pour obtenir un coefficient de température élevé et stable.

2. Procédé pour fabriquer un capteur (100) selon la revendication 1, caractérisé en ce
que lors de l'étape de préparation du mélange de la pâte formée d'un résinate de platine et de la pâte formée d'un résinate de rhodium, la pâte formée d'un résinate de platine comporte 12 % de platine, le reste de la pâte étant formé par un résinate, et la pâte formée du résinate de rhodium contient 7 % en poids de rhodium, le reste de la pâte étant ici également formé par un résinate.

3. Procédé pour fabriquer un capteur (100) selon la revendication 1 ou 2, caractérisé en ce
que la cuisson de la pâte s'effectue à une température d'environ 800°C.

4. Procédé selon la revendication 1, caractérisé en ce
que le support (102) est formé de 96,5 % à 99,5 % d'oxyde d'aluminium et que le reste du support est constitué par d'autres oxydes.

5. Procédé selon la revendication 1, caractérisé en ce
que le rapport du résinate de platine au résinate de rhodium est compris entre 99 % en poids et 1 % en poids.
